Europäisches Patentamt

(19) European Patent Office

Office européen des brevets

(11) Publication number: **0 156 511**
**B1**

(12) **EUROPEAN PATENT SPECIFICATION**

(45) Date of publication of patent specification: **19.04.89**

(21) Application number: **85301217.7**

(22) Date of filing: **22.02.85**

(51) Int. Cl.⁴: **C 04 B 26/04,** C 04 B 38/02 //
(C04B26/04, 18:08, 22:06)

(54) Thermal insulating material.

(30) Priority: **29.02.84 FR 8403140**

(43) Date of publication of application:
**02.10.85 Bulletin 85/40**

(45) Publication of the grant of the patent:
**19.04.89 Bulletin 89/16**

(84) Designated Contracting States:
**BE DE FR GB IT NL**

(56) References cited:
**DE-A-3 019 215**
**DE-C- 883 343**
**US-A-3 070 570**
**US-A-3 830 776**

**CHEMICAL ABSTRACTS, vol. 96, no. 10, March
1982, page 308, no. 73642c, Columbus, Ohio,
US; & JP - A - 81 131 887 (SUMITOMO
ELECTRIC INDUSTRIES, LTD.) 15-10-1981**

(73) Proprietor: **Exxon Research and Engineering
Company
P.O.Box 390 180 Park Avenue
Florham Park New Jersey 07932 (US)**

(72) Inventor: **Parrot, Pierre Roger
10 rue du Belvédère
F-76130 Mont-Saint-Aignan (FR)**
Inventor: **Lecorbeiller, Gilbert Marie
19 rue Chedanne
F-76150 Maromme (FR)**

(74) Representative: **Bawden, Peter Charles et al
ESSO CHEMICAL LIMITED Esso Chemical
Research Centre PO Box 1
Abingdon Oxfordshire OX13 6BB (GB)**

Courier Press, Leamington Spa, England.

## Description

The present invention relates to a process for the production of a thermal insulating material.

It is an object of the invention to provide a relatively low cost foamed or expanded thermal insulating material. Insulation materials of thermoplastic such as polyethylene and coal ash are known from Japanese Patent Application 81,131,887 and according to German Patent Application 30 19 215 these may be made from polypropylene and foamed with azo producing blowing agents. We have now found an attractive process for the manufacture of similar materials especially from petroleum resins.

According to one aspect of the invention, a process for preparing a foamed or expanded thermal insulating material comprises the steps of intimately mixing together a coal ash and a petroleum resin and/or a synthetic thermoplastic polymer in particulate form, incorporating a dilute solution of hydrogen peroxide in a quantity sufficient to form a mass having a paste-like mouldable consistency, shaping or moulding the mass to the required shape or shapes and heating for at least 1 hour at a temperature of at least 150°C.

The coal ash is preferably fly ash which is a product of the combustion of powdered coal, normally using a forced draft.

Among the petroleum resins which may be employed are those obtained from the polymerisation of steam-cracked or thermally-cracked naphthas. The resins may be aliphatic or aromatic or aliphatic/aromatic and may be the partially or substantially fully hydrogenated counterparts thereof. Typical resins may be prepared by the thermal or catalytic, generally Friedel-Crafts, polymerisation of unsaturated feeds, obtained from petroleum cracking such as $C_5/C_6$ olefine diolefine containing aliphatic feeds or the $C_8/C_9$ unsaturated aromatic feeds or mixtures thereof. A range of products is commercially available. The petroleum resin is mixed into the coal fly ash in particulate form, normally of average size not exceeding 5 mm, preferably up to 1 mm.

In addition to, or in substitution for a part of the whole of, the petroleum resin, it is possible to employ a thermoplastic synthetic polymer, for example, an ethylene/vinyl acetate type. Again, the synthetic polymer is employed in particulate form, preferably of average size not exceeding 5 mm.

The foaming or expansion agent employed is a dilute solution of hydrogen peroxide. By "dilute solution" is meant not greater than 6 wt% and very preferably not greater than 3 wt%. A 3 wt% solution of hydrogen peroxide corresponds to 10 volume strength (1 ml of the 3 wt% $H_2O_2$ will liberate 10 ml of oxygen gas on full decomposition and is known as 10 volume $H_2O_2$). In the practice of this invention it is especially preferred to employ 1 to 5 volume hydrogen peroxide. These low volume strengths give rise to a product of slightly higher density and higher compression resistance than higher volume hydrogen peroxides.

It has been unexpectedly found that other inorganic foaming agents, for example, ammonium nitrate and sodium tetraborate, do not give rise to utilisable products.

The following is a preferred range of relative amounts of components that can be employed:—

| Coal fly ash | 40 to 60% by weight | Total 70 wt% |
| Petroleum resin or resin plus synthetic polymer | 30 to 10% by weight | |

| Hydrogen peroxide | 30% by weight (1 to 5 volume strength) |

The mixing of the coal ash, petroleum resin and/or synthetic thermoplastic polymer, is normally conducted at room temperature. The hydrogen peroxide solution is then added, forming a paste-like mouldable mass. The thus obtained paste is then placed in a mould and heated. The heating is normally conducted in the range 150 to 250°C; preferably 150 to 200°C when petroleum resin is employed. When a thermoplastic polymer is used the temperature required may be higher to obtain a substantially homogeneous proudct. Usually heating is continued for at least 1 hour, and suitably for from 1 to 3 hours.

The formed, shaped product can have a thermal conductivity coefficient of approximately 0.1 W/m.°C. This is only from two to three times higher than that of foamed or expanded polystyrene, and some twenty to thirty times less than that of cellular concrete.

Samples of materials made by the process of the invention had good water resistance. There was no increase in weight even after several weeks immersion in water.

The fire resistance of samples tested was good, even after heating to 1300 to 1500°C the samples remained essentially in their original shape and did not drop to powder. When in contact with a naked flame no flame propagation occurred on or below the surface.

Mechanical compression resistance of materials made by the invention is normally in the range 90 to 110 kPa.

The following Examples are given by way of non-limitative illustration of the invention:

Example 1

This Example illustrates the effect on relative density (apparent density) of the concentration of the hydrogen peroxide employed, other components being constant. Three different shapes of product were moulded, viz. a cone, a parallelipiped and a cylinder.

The test products were moulded from 75 parts by weight of fly ash and 25 parts by weight of a finely ground (1 mm) polyaromatic petroleum resin sold under the Trade Name Escorez 3102 (Ring and Ball softening point 100°C and molecular weight approximately 600). 40 parts by weight of hydrogen peroxide (oxygenated water) of different concentrations were employed.

The test products were heated for 2 hours at approximately 180°C.

In each case increase in hydrogen peroxide concentration was accompanied by decrease in apparent density up to 5 volume $H_2O_2$.

Example 2

A product was obtained from:—

75 parts by weight of coal fly ash;
25 parts by weight of EVA copolymer;
25 parts by weight of 2.5 vol $H_2O_2$.

·The ethylene/vinyl acetate copolymer was one having (i) from 12 to 16 wt% of vinyl acetate and (ii) a melt index of from 2000 to 5000; and was in finely ground (approx 1 mm) form.

The pasty mouldable mass obtained was moulded into the shape of a cone and then heated at 200°C for 2 hours.

The product had an apparent density of 0.48.

## Claims

1. A process for preparing a foamed or expanded thermal insulating material, comprising the steps of intimately mixing together a coal ash and a petroleum resin and/or synthetic thermoplastic polymer in particulate form, incorporating a dilute solution of hydrogen peroxide containing no more than 6 wt.% hydrogen peroxide, in a quantity sufficient to form a mass having a paste-like mouldable consistency, shaping or moulding the mass to the required shape or shapes and heating for at least 1 hour at a temperature of at least 150°C.

2. A process as claimed in claim 1, wherein the coal ash is a fly ash.

3. A process as claimed in claim 1 or claim 2, wherein the petroleum resin particulate size is not more than 1 mm.

4. A process as claimed in any preceding claim, wherein the petroleum resin is a polyaromatic resin.

5. A process as claimed in any preceding claim, wherein the synthetic thermoplastic polymer, when employed, is in particulate form, preferably of average size not more than 5 mm.

6. A process as claimed in any preceding claim, wherein the hydrogen peroxide solution is less than 10 volume concentration, preferably up to 5 volume concentration.

7. A process as claimed in any preceding claim, wherein the heating is conducted at a temperature in the range 100°C to 250°C.

## Patentansprüche

1. Verfahren zur Herstellung eines geschäumten oder expandierten Wärmeisoliermaterials, bei dem man eine Kohlenasche und ein Petrolharz und/oder ein synthetisches thermoplastisches Polymer in Teilchenform innig miteinander mischt, eine verdünnte Lösung von Wasserstoffperoxid, die nicht mehr als 6 Gew.% Wasserstoffperoxid enthält, in einer ausreichenden Menge einarbeitet, um eine Masse mit einer pastenartigen Verformbaren Konsistenz zu bilden, die Masse in die erforderliche Form oder Formen bringt oder formt und mindestens eine Stunde lang bei einer Temperatur von mindestens 150°C erwärmt.

2. Verfahren nach Anspruch 1, bei dem die Kohlenasche eine Flugasche ist.

3. Verfahren nach Anspruch 1 oder 2, bei dem die Teilchengröße des Petrolharzes nicht mehr als 1 mm beträgt?

4. Verfahren nach einem der vorangehenden Ansprüche, bei dem das Petrolharz ein polyaromatischs Harz ist.

5. Verfahren nach einem der vorangehenden Ansprüche, bei dem das synthetische thermoplastische Polymere, sofern verwendet, in Teilchenform, vorzugsweise in einer mittleren Größe von nicht mehr als 5 mm, vorliegt.

6. Verfahren nach einem der vorhangehenden Ansprüche, bei dem die Wasserstoffperoxidlösung eine Volumenkonzentration von weniger als 10, vorzugsweise bis zu 5, aufweist.

7. Verfahren nach einem der vorangehenden Ansprüche, bei dem das Erwärmen bei einer Temperatur im Bereich von 100 bis 250°C durchgeführt wird.

## Revendications

1. Procédé de préparation d'un matériau thermoisolant alvéolaire ou expansé, comprenant les étapes consistant à mélanger intimement ensemble une cendre de houille, une résine de pétrole et/ou un polymère thermoplastique synthétique sous forme de particules, à incorporer une solution diluée de peroxyde d'hydrogène ne contenant pas plus de 6% en poids de peroxyde d'hydrogène, en une quantité suffisante pour former une masse présentant une consistance apte au soulage, analogue à une pâte, à façonner ou mouler la masse à la ou les formes requises et à effectuer un chauffage pendant au moins une heure à une température d'au moins 150°C.

2. Procédé suivant la revendication 1, dans lequel la cendre de houille est une cendre volante.

3. Procédé suivant la revendication 1 ou la revendication 2, dans lequel le diamètre des particules de la résine de pétrole est non supérieur à 1 mm.

4. Procédé suivant l'une quelconque des revendications précédentes, dans lequel la résine de pétrole est une résine polyaromatique.

5. Procédé suivant l'une quelconque des revendications précédentes, dans lequel le polymère thermoplastique synthétique, lorsqu'il est utilisé, est sous forme de particules, ayant de préférence un diamètre moyen non supérieur à 5 mm.

6. Procédé suivant l'une quelconque des revendications précédentes, dans lequel la solution de peroxyde d'hydrogène est à une concentration inférieure à 10 volumes, de préférence à une concentration allant jusqu'à 5 volumes.

7. Procédé suivant l'une quelconque des revendications précédentes, dans lequel le chauffage est effectué à une température de 100°C à 250°C.